# EUROPÄISCHE PATENTSCHRIFT

(11) **EP 1 339 961 B1**
(45) Veröffentlichungstag und Bekanntmachung des Hinweises auf die Patenterteilung: **30.08.2006**
(21) Anmeldenummer: 01997632.3
(22) Anmeldetag: 15.11.2001
(51) Int. Cl.: F02D 41/38, F02D 41/40, F02D 41/12

(54) **VERFAHREN, COMPUTERPROGRAMM UND STEUER- UND/ODER REGELGERÄT ZUM BETREIBEN EINER BRENNKRAFTMASCHINE**
METHOD, COMPUTER PROGRAMME AND CONTROL OR REGULATION DEVICE FOR OPERATING AN INTERNAL COMBUSTION ENGINE
PROCEDE, PROGRAMME D'ORDINATEUR ET APPAREIL DE COMMANDE ET/OU DE REGLAGE PERMETTANT DE FAIRE FONCTIONNER UN MOTEUR A COMBUSTION INTERNE

(30) Priorität: 25.11.2000 DE 10058674
(43) Veröffentlichungstag der Anmeldung: 03.09.2003
(73) Patentinhaber: ROBERT BOSCH GMBH, 70442 Stuttgart (DE)
(72) Erfinder: REMBOLD, Helmut, 70435 Stuttgart (DE); FRENZ, Thomas, 86720 Noerdlingen (DE); KUESELL, Matthias, 71229 Leonberg (DE); MUELLER, Uwe, 71282 Hemmingen (DE); LANG, Klaus, 70439 Stuttgart (DE)
(86) Internationale Anmeldenummer: PCT/DE2001/004305
(87) Internationale Veröffentlichungsnummer: WO 2002/042626

(56) Entgegenhaltungen:
- DE-A- 19 731 102
- DE-A- 19 800 760
- US-A- 5 797 372

## Beschreibung

### Stand der Technik

Die Erfindung betrifft ein Verfahren zum Betreiben einer Brennkraftmaschine, insbesondere eines Kraftfahrzeugs, bei dem der Kraftstoff unter Druck über mindestens ein Einspritzventil zugeführt und der Kraftstoffdruck erfasst wird.

Ein solches Verfahren ist vom Markt her bekannt. Es wird als Verfahren zur Benzin-Direkteinspritzung (BDE) bezeichnet. Bei einer Brennkraftmaschine, die nach eiem solchen Verfahren betrieben wird, sind die Einspritzventile direkt an den Brennräumen angeordnet. Der Kraftstoff wird den Einspritzventilen über eine Kraftstoff-Sammelleitung zugeführt, welche auch als "Rail" bezeichnet wird. Der Kraftstoff in der Kraftstoff-Sammelleitung steht unter sehr hohem Druck, im Allgemeinen um die 12 MPa.

Im Betrieb der Brennkraftmaschine kann es immer wieder Situationen geben, in denen der Kraftstoffdruck in der Kraftstoff-Sammelleitung oberhalb des normalen Wertes liegt. Eine solche Situation kann sich dann ergeben, wenn eine relativ heiße Brennkraftmaschine abgestellt wird. Während der Standzeit kann es aufgrund des Nachheizens durch den heißen Motor in der Kraftstoff-Sammelleitung zu einem Anstieg des Kraftstoffdrucks kommen. Zur Absicherung ist zwar ein Druckbegrenzungsventil vorgesehen, welches den maximalen Druck in der Kraftstoff-Sammelleitung auf einen bestimmten Wert begrenzt. Um ein Ansprechen des Druckbegrenzungsventils im normalen Betrieb zu vermeiden, ist dieses jedoch so ausgelegt, dass sein Ansprechdruck höher ist als der normale Druck in der Kraftstoff-Sammelleitung. Üblicherweise beträgt der Ansprechdruck z.B. 12,5 MPa.

Wird nun die Brennkraftmaschine wieder angelassen, kann es sein, dass die im Allgemeinen auf den normalen Druck in der Kraftstoff-Sammelleitung ausgelegten Einspritzventile nicht mehr sicher öffnen. Um dieses Problem zu lösen, könnte man zwar die Einspritzventile so auslegen, dass sie auch bei einem höheren Druck in der Kraftstoff-Sammelleitung noch sicher öffnen. Derartige Einspritzventile bauen jedoch relativ groß und sind relativ teuer.

Die vorliegende Erfindung hat daher die Aufgabe, ein Verfahren der eingangs genannten Art so weiterzubilden, dass auch dann, wenn ein erhöhter Druck des Kraftstoffes in der Kraftstoff-Sammelleitung vorliegt, ein möglichst sicherer Betrieb üblicher Einspritzventile ermöglicht wird.

Diese Aufgabe wird bei einem Verfahren der eingangs genannten Art dadurch gelöst, dass dann, wenn der Kraftstoffdruck in der Kraftstoff-Sammelleitung oberhalb eines bestimmten Wertes liegt, ein Steuersignal erzeugt wird, welches einer Unterbrechung der Förderung des Kraftstoffs in die Kraftstoff-Sammelleitung entspricht.

### Vorteile der Erfindung

Die Erfindung geht von dem Gedanken aus, dass bei einem etwas erhöhten Druck des Kraftstoffes in der Kraftstoff-Sammelleitung die Einspritzventile zwar nicht sicher öffnen, aber in jedem Falle eine gewisse Kraftstoffmenge durch die Einspritzventile noch aus der Kraftstoff-Sammelleitung in den Brennraum der Brennkraftmaschine abgeführt wird. Wird nun, wie erfindungsgemäß vorgeschlagen wird, veranlasst, dass kein Kraftstoff mehr in die Kraftstoff-Sammelleitung nachgefördert wird, sinkt der Druck des Kraftstoffes in der Kraftstoff-Sammelleitung sehr schnell wieder auf das normale Niveau ab, auf dem die Einspritzventile normal und sicher arbeiten.

Hierdurch wird z.B. bei einer Brennkraftmaschine, die in heißem Zustand abgestellt worden ist und wieder gestartet werden soll, sichergestellt, dass ein zunächst zu hoher Kraftstoffdruck, der das sichere Arbeiten der Einspritzventile behindert, sehr schnell auf ein normales Niveau abgesenkt wird. Die Brennkraftmaschine kann somit sicher gestartet werden.

Ausserdem wird bei dem erfindungsgemäßen Verfahrens wenn die Drehzahl der Brennkraftmaschine unterhalb eines bestimmten Werts und der Kraftstoffdruck in der Kraftstoff-Sammelleitung oberhalb eines bestimmten Werts liegen, die sogenannte Boosterenergie, die das sichere Öffnen des Einspritzventils garantiert, und der Haltestrom, der das Offenbleiben sicherstellt, erhöht. Die ggf. permanente Erhöhung dieser beiden Größen wird durch die Steigerung von Spannung und Strom, mit denen die Magnetspule des Einspritzventils beaufschlagt wird, in einer Endstufe eines Steuergeräts realisiert. Auf diese Weise wird der Ventilkörper des Einspritzventils mit größerer Kraft zurückgezogen, so dass dieser auch bei einem erhöhten Kraftstoffdruck in der Kraftstoff-Sammelleitung sicher öffnet bzw. in der geöffneten Stellung verbleibt.

Die Erhöhung von Booster-Energie und Haltestrom muss jedoch durch eine höhere Leistung in der Endstufe des Steuergeräts aufgebracht werden. Da eine solche Endstufe im Allgemeinen für den normalen Betrieb ausgelegt ist, erwärmt sich die entsprechende Endstufe relativ stark.

Diese Erwärmung ist umso stärker, je höher die Drehzahl der Brennkraftmaschine ist. Dies deshalb, da die Öffnungsimpulse von der Endstufe in zeitlich kürzeren Abständen erzeugt werden müssen. Die Erhöhung der Boosterenergie und Haltestrom des Einspritzventils wird aus diesem Grund erfindungsgemäß nur dann eingesetzt, wenn die Drehzahl der Brennkraftmaschine unterhalb eines Wertes liegt, bei der die Erwärmung der Endstufe unkritisch ist.

In Weiterbildung dieses Verfahrens wird vorgeschlagen, dass dann, wenn der Kraftstoffdruck wegen eines Fehlers im Kraftstoffsystem oberhalb eines bestimmten Drucks liegt, der Betrieb der Brennkraftmaschine auf eine bestimmte maximale Drehzahl begrenzt wird. Diese Begrenzung ist besonders für den permaneten Betrieb der Brennkraftmaschine empfehlenswert. Das vorgeschlagene Verfahren deckt jenen Fall ab, in dem trotz des entsprechenden Steuersignals die Kraftstoffförderung in die Kraftstoff-Sammelleitung nicht unterbrochen werden kann. Dies ist z.B. bei einem klemmenden Mengensteuerventil der Fall. In diesem Fall kann ein sicheres Öffnen des Einspritzventils nur durch eine Erhöhung von Boostereneregie und Haltestrom gewährleistet werden. Wie oben ausgeführt worden ist, ist eine solche Erhöhung aus thermischen Gründen jedoch nur bei relativ niedrigen Drehzahlen zulässig. Dem wird durch diese Weiterbildung Rechnung getragen.

Die Erfindung betrifft ferner ein Verfahren zum Betreiben einer Brennkraftmaschine, insbesondere eines Kraftfahrzeugs, bei dem der Kraftstoff unter Druck in eine Kraftstoff-Sammelleitung gefördert und mindestens einem Brennraum über mindestens ein Einspritzventil zugeführt wird, wobei die Kraftstoffzufuhr in einem Schubbetrieb der Brennkraftmaschine mindestens zeitweise unterbrochen wird.

Auch dieses Verfahren ist vom Markt her bekannt und arbeitet mit der bereits oben beschriebenen Benzin-Direkteinspritzung. Auch im Schubbetrieb kann es aufgrund der heißen Brennkraftmaschine in der Kraftstoff-Sammelleitung zu einem Anstieg des Druckes kommen. Ein solcher erhöhter Druck könnte, wie bereits oben dargelegt wurde, den sicheren Betrieb der Einspritzventile gefährden. Die alternativ mögliche stärkere Auslegung der Einspritzventile ist wegen der großen Bauweise und des hohen Preises wiederum nachteilig.

Zur Lösung dieses Problems wird erfindungsgemäß vorgeschlagen, dass dann, wenn die Brennkraftmaschine in einen Schubbetrieb schaltet, ein Steuersignal erzeugt wird, welches einer Unterbrechung der Förderung des Kraftstoffs in die Kraftstoff-Sammelleitung veranlasst, und noch eine solche Anzahl von Einspritzungen durch das Einspritzventil erfolgt, dass der Kraftstoffdruck in der Kraftstoff-Sammelleitung sinkt.

Das hier vorgeschlagene Verfahren wirkt also präventiv: Um zu verhindern, dass während des Schubbetriebs aufgrund der Aufheizung des Kraftstoffes in der Kraftstoff-Sammelleitung der in dieser herrschende Druck einen Grenzwert überschreitet, wird zunächst der Kraftstoffdruck in der Kraftstoff-Sammelleitung abgesenkt. Dies geschieht dadurch, dass der Beginn des Schubbetriebs um eine kurze Zeitspanne verzögert wird. Im Allgemeinen genügen 2 bis 3 zusätzliche Einspritzungen, um die für die entsprechende Druckabsenkung notwendige Kraftstoffmenge aus der Kraftstoff-Sammelleitung abzulassen. Indem zuvor die Kraftstoffförderung in die Kraftstoff-Sammelleitung unterbrochen wird, wird verhindert, dass neuer Kraftstoff in die Kraftstoff-Sammelleitung gelangt. Der Anstieg des Kraftstoffdrucks in der Kraftstoff-Sammelleitung wärend des Schubbetriebs erfolgt somit ausgehend von einem niedrigeren Niveau, was dazu führt, dass der Enddruck nach dem Druckanstieg unterhalb des für die Einspritzventile "gefährlichen" Druckniveaus bleiben kann.

In einer auf beide Verfahren anwendbaren Weiterbildung, die in einem Unteranspruch angegeben ist, wird die Kraftstoffförderung dadurch unterbrochen, dass ein Mengensteuerventil im Kraftstoffsystem in einen geöffneten Zustand geschaltet wird. Ein solches Mengensteuerventil ist im Allgemeinen in einer Rückförderleitung parallel zur Hochdruckpumpe des Kraftstoffsystems angeordnet. Wird das Mengensteuerventil in einen geöffneten Zustand geschaltet, was im Allgemeinen dem stromlosen Zustand entspricht, fördert die Pumpe nur noch in die Rückflussleitung und nicht mehr in die Kraftstoff-Sammelleitung. Die vorgeschlagene Maßnahme ist besonders einfach zu realisieren.

Möglich ist auch, dass dann, wenn der Kraftstoffdruck und die Drehzahl der Brennkraftmaschine oberhalb eines bestimmten Wertes liegen, insbesondere nach Beendigung einer Schubphase, die Förderung des Kraftstoffs, insbesondere über das Mengensteuerventil, unterbrochen und das Einspritzventil während eines begrenzten Zeitraums mit erhöhter Ansteuerenergie beaufschlagt wird.

Vorteilhafterweise sind die Förderung des Kraftstoffs und dessen Einspritzung durch die Einspritzventile zeitlich so aufeinander abgestimmt, dass die Druckpulsationen in der Kraftstoff-Sammelleitung minimal sind. Ein Überschreiten eines für den sicheren Betrieb der Einspritzventile zulässigen Druckes des Kraftstoffes in der Kraftstoff-Sammelleitung kann nicht nur durch einen Fehler im Kraftstoffsystem oder eine Erwärmung des in der Kraftstoff-Sammelleitung eingeschlossenen Kraftstoffs hervorgerufen werden, sondern auch durch Druckpulsationen in der Kraftstoff-Sammelleitung. Diese wiederum sind die Folge u.a. der im Allgemeinen durch eine Kolbenpumpe bewirkten Förderung des Kraftstoffes in die Kraftstoff-Sammelleitung. Gleichzeitig führen die Einspritzimpulse der Einspritzventile wiederum zu Druckabsenkungen in der Kraftstoff-Sammelleitung. Will man nun erreichen, dass auch bei den Druckspitzen in der Kraftstoff-Sammelleitung die Einspritzventile sicher öffnen, muss der Druck in der Kraftstoff-Sammelleitung entsprechend eingestellt werden. Um dennoch ein insgesamt relativ hohes durchschnittliches Niveau des Drucks in der Kraftstoff-Sammelleitung zu erreichen, sollten die Amplituden zwischen den Druckspitzen und den Druckminima aufgrund der Einspritzungen möglichst klein sein. Dies kann auf einfache Weise dadurch herbeigeführt werden, dass die Förderung des Kraftstoffes mit der Einspritzung durch die Einspritzventile so "synchronisiert" wird, dass die Förderimpulse in die Kraftstoff-Sammelleitung hinein und die Einspritzimpulse durch die Einspritzventile zeitlich in etwa zusammenfallen.

Die Erfindung betrifft auch ein Computerprogramm, welches zur Durchführung des obigen Verfahrens geeignet ist, wenn es auf einem Computer ausgeführt wird. Besonders bevorzugt ist dabei, wenn das Computerprogramm auf einem Speicher, insbesondere auf einem Flash-Memory, abgespeichert ist.

Die Erfindung betrifft schließlich noch ein Steuer- und/oder Regelgerät zum Betreiben einer Brennkraftmaschine, insbesondere eines Kraftfahrzeugs, bei der der Kraftstoff unter Druck in eine Kraftstoff-Sammelleitung gefördert und mindestens einem Brennraum über mindestens ein Einspritzventil zugeführt wird. Das Steuer- und/oder Regelgerät zeichnet sich erfindungsgemäß dadurch aus, dass es zur Steuerung und/oder Regelung des Verfahrens nach einem der obigen Ansprüche geeignet ist.

### Zeichnung

Nachfolgend werden Ausführungsbeispiele der Erfindung unter Bezugnahme auf die beiliegende Zeichnung im Detail erläutert. In der Zeichnung zeigen:
- Fig. 1:: ein Blockschaltbild einer Brennkraftmaschine;
- Fig. 2:: ein Flussdiagramm eines ersten Ausführungsbeispiels eines Verfahrens zum Betreiben der Brennkraftmaschine von Fig. 1; und
- Fig. 3:: ein Flussdiagramm eines zweiten Ausführungsbeispiels eines Verfahrens zum Betreiben der Brennkraftmaschine von Fig. 1.

### Beschreibung der Ausführungsbeispiele

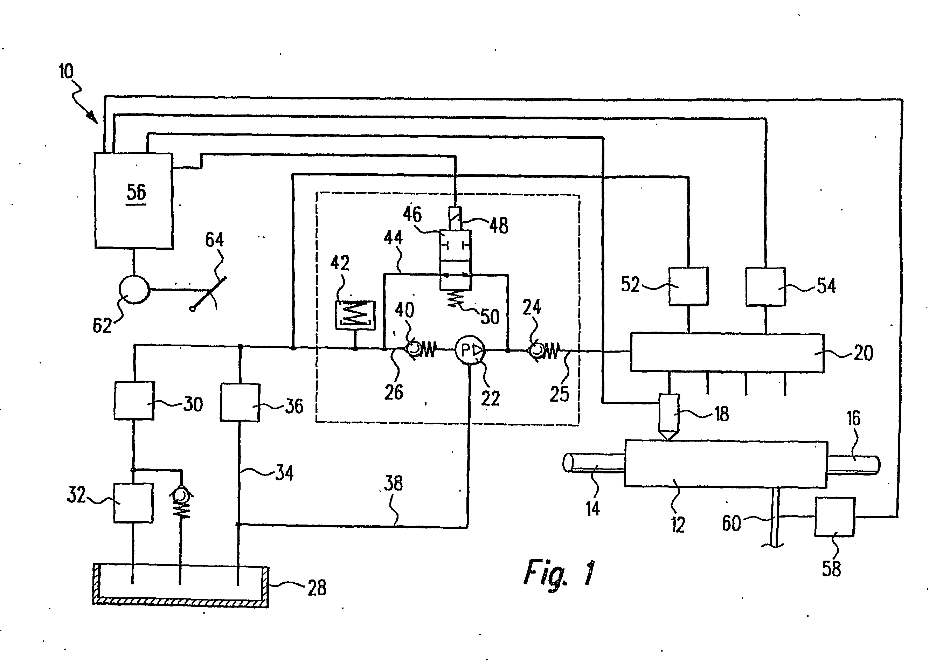

In Fig. 1 trägt eine Brennkraftmaschine insgesamt das Bezugszeichen 10. Sie umfasst einen Brennraum 12, dem Luft über ein Ansaugrohr 14 zugeführt wird. Die Abgase werden über ein Abgasrohr 16 abgeleitet.

Kraftstoff wird dem Brennraum 12 direkt durch ein Einspritzventil 18 zugeführt. Dieses ist an eine üblicherweise als "Rail" bezeichnete Kraftstoff-Sammelleitung 20 angeschlossen. Der Kraftstoff wird in die Kraftstoff-Sammelleitung 20 wiederum durch eine Pumpe 22 gefördert und unter Druck gesetzt. Zwischen Pumpe 22 und Kraftstoff-Sammelleitung 20 ist ein Hochdruckabschnitt 25 einer Kraftstoffleitung mit einem ersten Rückschlagventil 24 vorgesehen, welches von der Kraftstoff-Sammelleitung 20 zur Pumpe 22 hin sperrt.

Von der Pumpe 22 führt ein Niederdruckabschnitt 26 der Kraftstoffleitung zu einem Tank 28. Im Niederdruckabschnitt 26 der Kraftstoffleitung ist ein Kraftstofffilter 30 und eine elektrische Kraftstoffpumpe 32 angeordnet. Über eine Zweigleitung 34 ist ein Niederdruckregler 36 an den Niederdruckabschnitt 26 der Kraftstoffleitung angeschlossen. Eine Leckageleitung 38 verbindet die Pumpe 22 ebenfalls mit der Zweigleitung 34.

Zwischen Pumpe und Filter 30 sind noch ein zum Tank 28 hin sperrendes zweites Rückschlagventil 40 und ein Druckdämpfer 42 vorgesehen. Eine Rückströmleitung 44 ist einerseits zwischen Pumpe 22 und erstem Rückschlagventil 24 und andererseits zwischen Druckdämpfer 42 und zweitem Rückschlagventil 40 mit der Kraftstoffleitung 26 verbunden. In der Rückströmleitung ist ein Mengensteuerventil 46 zwischengeschaltet. Bei diesem handelt es sich um ein 2/2-Schaltventil, welches in seiner einen Extremstellung die Rückströmleitung 44 vollständig sperrt und in der anderen Extremstellung die Rückströmleitung 44 vollständig freigibt. Das Mengensteuerventil 46 wird durch einen Magnetsteller 48 betätigt. Im stromlosen Zustand wird das Mengensteuerventil 46 durch eine Feder 50 in seine vollständig geöffnete Extremstellung gedrückt.

Die Kraftstoff-Sammelleitung 20 ist mit einem Druckbegrenzungsventil 52 verbunden, welches wiederum fluidisch mit dem Niederdruckabschnitt 26 der Kraftstoffleitung an einer Stelle zwischen dem Druckdämpfer 42 und dem Filter 30 verbunden ist. Bei dem Druckbegrenzungsventil 52 handelt es sich um ein federbelastetes Kugelventil mit einem Öffnungsdruck von ungefähr 12,5 Mpa.

Der Druck in der Kraftstoff-Sammelleitung 20 wird von einem Drucksensor 54 erfasst, der entsprechende Signale an ein Steuer- und Regelgerät 56 leitet. Dieses erhält ferner noch Signale von einem Drehzahlgeber 58, welcher die Drehzahl einer Kurbelwelle 60 abgreift. Eingangsseitig ist das Steuer- und Regelgerät 56 noch mit einem Stellungsgeber 62 eines Gaspedals 64 verbunden. Ausgangsseitig steuert das Steuer- und Regelgerät 56 den Magnetsteller 48 des Mengensteuerventils 46 sowie das Einspritzventil 18 an.

Im Normalbetrieb wird die Kraftstoff-Sammelleitung 20 von der Pumpe 22 unter Druck gesetzt. Der Druck des Kraftstoffs in der Kraftstoff-Sammelleitung 20 wird dabei durch einen geschlossenen Regelkreis geregelt, welcher den Drucksensor 54 und das Mengensteuerventil 46 umfasst. Ein Rückfluss des Kraftstoffs von der Kraftstoff-Sammelleitung 20 zur Pumpe 22 hin wird durch das erste Rückschlagventil 24 verhindert.

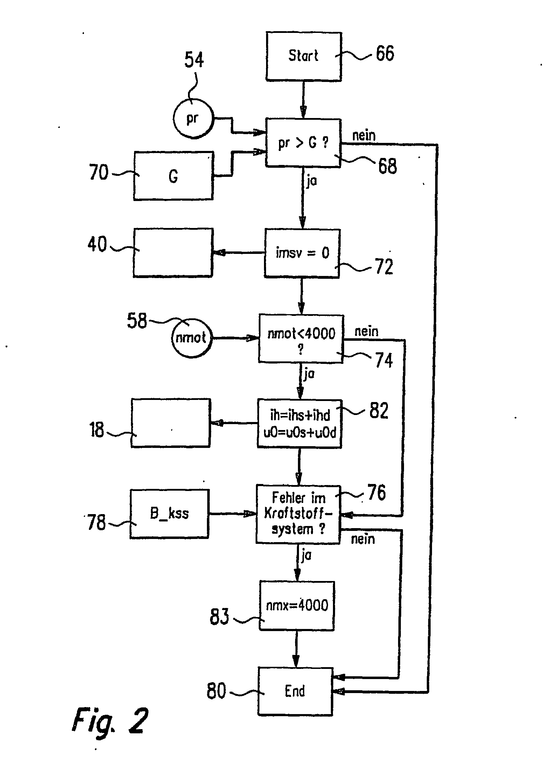

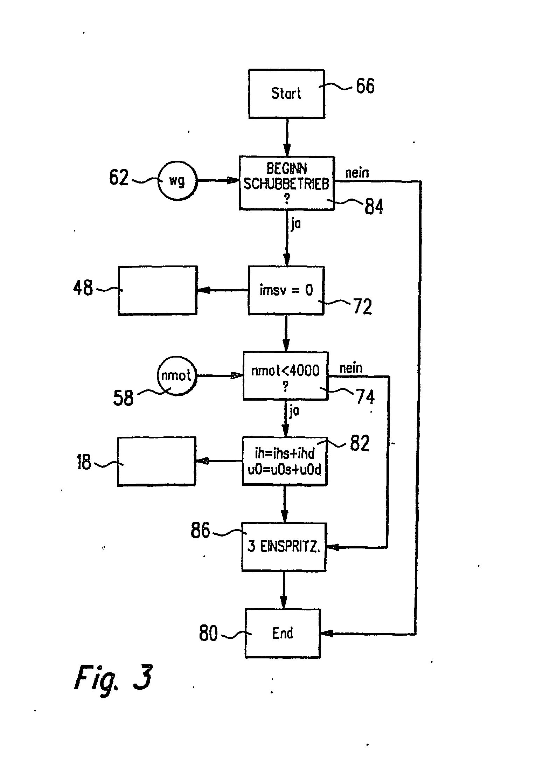

In bestimmten Situationen kann es vorkommen, dass trotz ordnungsgemäß funktionierender Regelstrecke der Druck in der Kraftstoff-Sammelleitung 20 einen Wert erreicht, bei dem die Einspritzventile 18 nicht mehr sicher öffnen. Hierdurch kann es zu Gemischabweichungen kommen, welche das Emissions- und Leistungsverhalten der Brennkraftmaschine sehr negativ beeinflussen, oder es kann sogar zu Verbrennungsaussetzern kommen. Mögliche, gegebenenfalls präventive Vorgehensweisen in diesen Fällen sind in den Fig. 2 und 3 dargestellt:

Das in Fig. 2 dargestellte Verfahren beginnt in einem Startblock 66. In einem Block 68 wird abgefragt, ob der Druck pr in der Kraftstoff-Sammelleitung 20 größer als ein Grenzwert G ist. Der Druck pr wird von dem Drucksensor 54 bereitgestellt, wohingegen der Grenzwert G in einem Festwertspeicher 70 abgelegt ist. Ist der Druck pr tatsächlich größer als der Grenzwert G, wird im Block 72 der Steuerstrom imsv = 0 gesetzt. Beim Steuerstrom imsv handelt es sich um den Steuerstrom des Magnetstellers 48 des Mengensteuerventils 46. Der Magnetsteller 48 wird also stromlos geschaltet, wodurch sich das Mengensteuerventil aufgrund der Beaufschlagung durch die Feder 50 in seine vollständig offene Extremstellung bewegt, in der folglich die Rückströmleitung 44 offen ist. In diesem Fall wird von der Pumpe 22 der Kraftstoff nicht in die unter Druck stehende Kraftstoff-Sammelleitung 20, sondern in die Rückströmleitung 44 gefördert. Die Förderung von Kraftstoff in die Kraftstoff-Sammelleitung 20 ist also unterbrochen.

In einem Block 74 wird abgefragt, ob die vom Drehzahlgeber 58 erfasste Drehzahl nmot der Kurbelwelle 60 kleiner ist als 4000 Umdrehungen/min. Liegt die Drehzahl höher, wird zu einem Block 76 gesprungen, in dem abgeprüft wird, ob ein Fehler im Kraftstoffsystem vorliegt. Die Prüfung erfolgt auf der Basis eines Fehlerbits B_kss, welches nur bei einem festgestellten Fehler gesetzt ist (Block 78). Lautet die Antwort im Block 76 "nein", endet das Verfahren im Block 80.

Wird im Block 74 jedoch festgestellt, dass die Drehzahl nmot geringer ist als 4000 Umdrehungen/min, wird im Block 82 die Booster-Energie einer Endstufe (nicht dargestellt) des Steuer- und Regelgeräts 56 hochgesetzt. Dies erfolgt dadurch, dass die Spannung u0 und der Haltestrom ih für das Einspritzventil 18 von einem Sollwert u0s bzw. ihs ausgehend um einen Betrag u0d bzw. ihd hochgesetzt wird. Auf diese Weise wird kurzzeitig die Stellkraft des Einspritzventils 18 erhöht, so dass auch bei einem etwas erhöhten Druck pr des Kraftstoffs in der Kraftstoff-Sammelleitung 20 ein sicheres Öffnen des Einspritzventils 18 gewährleistet ist.

Da eine solche Erhöhung von Spannung und Strom jedoch zu einer deutlichen Erwärmung der entsprechenden Endstufe im Steuer- und Regelgerät 56 führt, die bei hohen Drehzahlen aufgrund der kurz hintereinander folgenden Ansteuerimpulse zu einer thermischen Überbelastung der Endstufe führen kann, wird eine solche permanente Erhöhung auf jene Fälle beschränkt, in denen die Drehzahl nmot der Kurbelwelle 60 unterhalb einer für die Endstufe des Steuer- und Regelgerätes 56 unbedenklichen Drehzahl, im vorliegenden Falle von 4000 Umdrehungen/min, liegt.

Das.bisher beschriebene Verfahren kann z.B. dann angewendet werden, wenn die Brennkraftmaschine 10 in warmem Zustand abgestellt wird. Aufgrund von Wärmeleitung erwärmt sich im abgestellten Zustand der in der Kraftstoff-Sammelleitung 20 durch das erste Rückschlagventil 24 eingeschlossene Kraftstoff, worauf sich der Druck in der Kraftstoff-Sammelleitung 20 erhöht. Der Druck pr des Kraftstoffs in der Kraftstoff-Sammelleitung 20 kann dabei jenen Druck überschreiten, in dem die Einspritzventile 18 im Normalfall noch sicher betrieben werden können. Zwar wird der maximale Druck in der Kraftstoff-Sammelleitung 20 durch das Druckbegrenzungsventil 52 begrenzt, dieses ist jedoch so ausgelegt, dass es erst auslöst, wenn der Druck in der Kraftstoff-Sammelleitung 20 deutlich oberhalb des normalen Betriebsdruckes liegt. Auf diese Weise soll verhindert werden, dass das Druckbegrenzungsventil 52 im normalen Betrieb unnötigerweise öffnet.

Wird nun die Brennkraftmaschine 10 in warmem Zustand wieder angelassen, wird der sich während der Abstellzeit erhöhte Kraftstoffdruck pr in der Kraftstoff-Sammelleitung 20 durch den Drucksensor 54 erfasst. In der Folge wird das Mengensteuerventil 46 stromlos geschaltet; in die bereits unter erhöhtem Druck stehende Kraftstoff-Sammelleitung 20 wird also kein weiterer Kraftstoff mehr gefördert. Da beim Anlassen die Drehzahl unterhalb von 4000 Umdrehungen/min liegt, wird ferner die Boosterenergie und der Haltestrom der Einspritzventile 18 erhöht. Auf diese Weise werden die Einspritzventile 18 während des Anlassvorganges der Brennkraftmaschine 10 so angesteuert, dass sie trotz des erhöhten Druckes pr in der Kraftstoffsammel-Leitung 20 sicher öffnen und schließen. Gleichzeitig wird durch die unterbrochene Förderung des Kraftstoffes in die Kraftstoff-Sammelleitung 20 sichergestellt, dass der Druck in der Kraftstoff-Sammelleitung 20 durch den durch die Einspritzventile 18 aus der Kraftstoff-Sammelleitung 20 in den Brennraum 12 abströmenden Kraftstoff sehr schnell absinkt, so dass rasch wieder zu einem normalen Betrieb übergegangen werden kann.

In jenen Fällen, in denen aufgrund einer mechanischen Blockierung des Mengensteuerventils 46 in der geschlossenen Extremstellung die Förderung des Kraftstoffs in die Kraftstoff-Sammelleitung 20 nicht unterbrochen werden kann, wird vom Steuer- und Regelgerät 56 das Fehlerbit B_kss gesetzt (Block 78). In diesem Fall wird im Block 83 die maximale Betriebsdrehzahl nmx der Kurbelwelle 60 der Brennkraftmaschine 10 auf 4000 Umdrehungen/min begrenzt. Bis zu dieser Drehzahl ist eine Erhöhung der Ansteuerenergie (Spannung u0 und Strom ih) möglich, ohne dass die Endstufe des Steuer- und Regelgeräts 56 sich zu stark aufheizt.

In Fig. 3 ist dargestellt, wie einem unzulässigen Anstieg des Drucks pr in der Kraftstoff-Sammelleitung 20 vorgebeugt werden kann. Zu Figur 2 funktionsäquivalente Blöcke tragen die gleichen Bezugszeichen. Ein solcher Anstieg kann z.B. dann auftreten, wenn die Brennkraftmaschine 10 im Schubbetrieb arbeitet. Dies ist z.B. bei der Bergabfahrt eines Kraftfahrzeugs der Fall. In diesem Fall werden die Einspritzventile 18 des Steuer- und Regelgeräts 56 üblicherweise nicht mehr angesteuert, sie bleiben also in einer geschlossenen Position, so dass kein Kraftstoff von der Kraftstoff-Sammelleitung 20 in den Brennraum 12 gelangt.

Gleichzeitig kommt es aufgrund der warmen Brennkraftmaschine 10 auch zu einer Erwärmung des in der Kraftstoff-Sammelleitung 20 eingeschlossenen Kraftstoffs, wodurch sich der Druck wie auch bei dem im Zusammenhang mit Fig. 2 beschriebenen Ausführungsbeispiel erhöht. Um zu verhindern, dass durch diese Druckerhöhung der Druck in der Kraftstoff-Sammelleitung 20 einen Wert erreicht, bei dem die Einspritzventile 18 dann, wenn der Schubbetrieb beendet wird, nicht mehr sicher öffnen, wird der Druck pr des Kraftstoffs in der Kraftstoff-Sammelleitung 20 zu Beginn des Schubbetriebs abgesenkt. Dies geschieht folgendermaßen:

Zunächst wird in einem Block 84 erfasst, ob die Brennkraftmaschine 10 in den Zustand "Schubbetrieb" geschaltet werden soll. Dies erfolgt auf der Basis der vom Stellungsgeber 62 erfassten Stellung des Gaspedals 64. Soll der Schubbetrieb eingeleitet werden, wird im Block 72 der Magnetsteller 48 des Mengensteuerventils 46 stromlos geschaltet, es erfolgt also keine Förderung von Kraftstoff mehr in die Kraftstoff-Sammelleitung 20. Wie beim vorhergehenden Ausführungsbeispiel wird anschließend dann, wenn die Drehzahl der Kurbelwelle 60 kleiner ist als 4000 Umdrehungen/min, die Ansteuerenergie (Spannung u0 und Strom ih) der Einspritzventile 18 erhöht. Diese Erhöhung erfolgt vorsichtshalber.

Um den Druck des Kraftstoffs in der Kraftstoff-Sammelleitung 20 jedoch noch abzusenken, werden im Block 86 noch drei Einspritzungen pro Einspritzventil 18 ausgelöst. Auf diese Weise wird Kraftstoff aus der Kraftstoff-Sammelleitung 20 in den Brennraum 12 abgelassen, ohne dass neuer Kraftstoff in die Kraftstoff-Sammelleitung 20 gefördert wird. Hierdurch sinkt der Druck in der Kraftstoff-Sammelleitung 20 ab. Die Anzahl der Einspritzungen im Block 86 ist in jedem Falle so gewählt, dass einerseits der Druckabfall in der Kraftstoff-Sammelleitung 20 so groß ist, dass auch bei einer Erwärmung des Kraftstoffes während des Schubbetriebs der für den Betrieb der Einspritzventile 18 kritische Druck nicht überschritten wird, dass aber andererseits aufgrund der Einspritzungen keine Beschleunigung der Brennkraftmaschine 10 erfolgt.

Sollte der Druck während der Schubphase trotzdem über den kritischen Wert ansteigen und die Motordrhezahl beim anschließenden Betätigen des Gaspedals über 4000 Umdrehungen/min liegen, so wird die Einspritzung mit erhöhter Ansteuereenergie bei nicht aktivem Mengensteuerventil und über einen begrenzten Zeitraum realisiert. Die Dauer des Zeitraums ist so gewählt, dass noch keine unzulässige Erwärmung der Endstufe auftritt. Üblicherweise fällt der Druck dabei nach wenigen Einspritzungen auf einen Wert im Nennbereich ab.

Das Programm endet auch im Falle von Fig. 3 in einem Endblock 80.

Im Übrigen sei noch darauf hingewiesen, dass ein regelmäßiges Überschreiten des normalen und sicheren Drucks in der Kraftstoff-Sammelleitung 20 dadurch vermieden werden kann, dass die Förderung des Kraftstoffs in die Kraftstoff-Sammelleitung 20 einerseits und die Abgabe des Kraftstoffs aus der Kraftstoff-Sammelleitung 20 über die Einspritzventile 18 andererseits zeitlich synchronisiert werden.

## Patentansprüche

1. Verfahren zum Betreiben einer Brennkraftmaschine (10) insbesondere eines Kraftfahrzeugs, bei dem der Kraftstoff unter Druck (pr) in eine Kraftstoff-Sammelleitung (20) gefördert und mindestens einem Brennraum (12) über mindestens ein Einspritzventil (18) zugeführt wird, wobei dann, wenn der Kraftstoffdruck (pr) in der Kraftstoff-Sammelleitung (20) oberhalb eines bestimmten Werts (G) liegt, ein Steuersignal (72) erzeugt wird, welches eine Unterbrechung der Förderung des Kraftstoffs in die Kraftstoff-Sammelleitung (20) veranlasst, **dadurch gekennzeichnet, dass** dann, wenn die Drehzahl (nmot) der Brennkraftmaschine (10) unterhalb eines bestimmten Werts und der Kraftstoffdruck (pr) in der Kraftstoff-Sammelleitung (20) oberhalb eines bestimmten Werts (G) liegen, die Ansteuerenergie, insbesondere die Boosterenergie und der Haltestrom (ih) des Einspritzventils (18), erhöht werden.

2. Verfahren nach Anspruch 1, **dadurch gekennzeichnet, dass** dann, wenn der Kraftstoffdruck (pr) wegen eines Fehlers (B_kss) im Kraftstoffsystem oberhalb eines bestimmten Werts (G) liegt, der Betrieb, vorzugsweise der permanente Betrieb, der Brennkraftmaschine (10) auf eine bestimmte maximale Drehzahl begrenzt wird.

3. Verfahren zum Betreiben einer Brennkraftmaschine (10), insbesondere eines Kraftfahrzeugs, bei dem der Kraftstoff unter Druck (pr) in eine Kraftstoff-Sammelleitung (20) gefördert und mindestens einem Brennraum (12) über mindestens ein Einspritzventil (18) zugeführt wird, wobei die. Kraftstoffzufuhr in einem Schubbetrieb der Brennkraftmaschine (10) mindestens zeitweise unterbrochen wird, **dadurch gekennzeichnet, dass** dann, wenn die Brennkraftmaschine (10) in einen Schubbetrieb (84) schaltet, ein Steuersignal (imsv) erzeugt wird, welches einer Unterbrechung der Förderung des Kraftstoffs in die Kraftstoff-Sammelleitung (20) veranlasst, und noch eine solche Anzahl von Einspritzungen durch das Einspritzventil (18) erfolgt (86), dass der Kraftstoffdruck (pr) sinkt.

4. Verfahren nach einem der vorhergehenden Ansprüche, **dadurch gekennzeichnet, dass** durch das Steuersignal (imsv) ein Mengensteuerventil (46) im Kraftstoffsystem in einen geöffneten Zustand geschaltet wird.

5. Verfahren nach einem der vorhergehenden Ansprüche, **dadurch gekennzeichnet, dass** dann, wenn der Kraftstoffdruck und die Drehzahl der Brennkraftmaschine oberhalb eines bestimmten Wertes liegen, insbesondere nach Beendigung einer Schubphase, die Förderung des Kraftstoffs, insbesondere über ein Mengensteuerventil, unterbrochen und das Einspritzventil während eines begrenzten Zeitraums mit erhöhter Ansteuerenergie beaufschlagt wird.

6. Verfahren nach einem der vorhergehenden Ansprüche, **dadurch gekennzeichnet, dass** die Förderung des Kraftstoffs und dessen Einspritzung durch die Einspritzventile zeitlich so : aufeinander abgestimmt sind, dass die Druckpulsationen-iri der Kraftstoff-Sammelleitung (20) minimal sind.

7. Computerprogramm, **dadurch gekennzeichnet, dass** es zur Durchführung des Verfahrens nach einem der Ansprüche 1 bis 6 geeignet ist, wenn es auf einem Computer ausgeführt wird.

8. Computerprogramm nach Anspruch 7, **dadurch gekennzeichnet, dass** es auf einem Speicher, insbesondere auf einem Flash-Memory, abgespeichert ist.

9. Steuer- und/oder Regelgerät zum Betreiben einer Brennkraftmaschine (10), insbesondere eines Kraftfahrzeugs, bei der der Kraftstoff unter Druck (pr) in eine Kraftstoff-Sammelleitung (20) gefördert und mindestens einem Brennraum (12) über mindestens ein Einspritzventil (18) zugeführt wird, **dadurch gekennzeichnet, dass** es zur Steuerung und/oder Regelung des Verfahrens nach einem der Ansprüche 1 bis 6 geeignet ist.

## Claims

1. Method for operating an internal combustion engine (10), in particular of a motor vehicle, in which the fuel is fed into a fuel collecting line (20) and is supplied to at least one combustion chamber (12) via at least one injection valve (18) under pressure (pr), a control signal (72) being generated when the fuel pressure (pr) in the fuel collecting line (20) is above a certain value (G), which control signal (72) triggers an interruption in the fuel feed into the fuel collecting line (20), **characterized in that** the actuation energy, in particular the booster energy and the holding current (ih) of the injection valve (18), is increased when the rotational speed (nmot) of the internal combustion engine (10) is below a certain value and the fuel pressure (pr) in the fuel collecting line (20) is above a certain value (G).

2. Method according to Claim 1, **characterized in that** the operation, preferably the permanent operation, of the internal combustion engine (10) is limited to a certain maximum rotational speed when the fuel pressure (pr) is above a certain value (G) on account of a fault (B_kss) in the fuel system.

3. Method for operating an internal combustion engine (10), in particular of a motor vehicle, in which the fuel is fed into a fuel collecting line (20) and is supplied to at least one combustion chamber (12) via at least one injection valve (18) under pressure (pr), the fuel feed being interrupted at least at times in an overrun operating mode of the internal combustion engine (10), **characterized in that** a control signal (imsv) is generated when the internal combustion engine (10) switches to an overrun operating mode (84), which control signal (imsv) triggers an interruption in the fuel feed into the fuel collecting line (20), and **in that** such a number of injections through the injection valve (18) still take place (86) that the fuel pressure (pr) decreases.

4. Method according to one of the preceding claims, **characterized in that** a quantity control valve (46) in the fuel system is switched to an open state by means of the control signal (imsv).

5. Method according to one of the preceding claims, **characterized in that** when the fuel pressure and the rotational speed of the internal combustion engine are above a certain value, in particular after the end of an overrun phase, the fuel feed, in particular via the quantity control valve, is interrupted and the injection valve is supplied with increased actuation energy for a limited period of time.

6. Method according to one of the preceding claims, **characterized in that** the fuel feed and the injection of said fuel through the injection valves are coordinated in terms of time in such a way that the pressure pulses in the fuel collecting line (20) are minimal.

7. Computer program, **characterized in that** it is suitable, if executed on a computer, for carrying out the method according to one of claims 1 to 6.

8. Computer program according to Claim 7, **characterized in that** it is stored on a memory, in particular on a flash memory.

9. Control and/or regulation device for operating an internal combustion engine (10), in particular of a motor vehicle, in which the fuel is fed into a fuel collecting line (20) and is supplied to at least one combustion chamber (12) via at least one injection valve (18) under pressure (pr), **characterized in that** it is suitable for controlling and/or regulating the method according to one of claims 1 to 6.

## Revendications

1. Procédé permettant de faire fonctionner un moteur à combustion interne (10), en particulier d'un véhicule automobile, selon lequel le carburant sous pression (pr) est transporté dans un collecteur de carburant (20) et amené à au moins une chambre de combustion (12) par au moins un injecteur (18), en générant lorsque la pression de carburant (pr) dans le collecteur de carburant (20) est supérieure à une valeur déterminée (G), un signal de commande (72) qui produit une interruption du transport du carburant dans le collecteur de carburant (20),
**caractérisé en ce que**
lorsque le régime (nmot) du moteur à combustion interne (10) est inférieur à une valeur déterminée et si la pression de carburant (pr) dans le collecteur de carburant (20) est supérieure à une valeur déterminée (G), on augmente l'énergie d'excitation, en particulier l'énergie de survoltage et le courant de maintien (ih) de l'injecteur (18) .

2. Procédé selon la revendication 1,
**caractérisé en ce que**
si la pression de carburant (pr) dans le système de carburant est supérieure à une valeur déterminée à cause d'une défaillance, le fonctionnement, de préférence le fonctionnement permanent, du moteur à combustion interne (10) est limité à un régime maximum déterminé.

3. Procédé permettant de faire fonctionner un moteur à combustion interne (10), en particulier d'un véhicule automobile, selon lequel le carburant sous pression (pr) est transporté dans un collecteur de carburant (20) et amené à au moins une chambre de combustion (12) par au moins un injecteur (18), au moins provisoirement en interrompant l'alimentation en carburant dans un mode de poussée du moteur à combustion interne (10),
**caractérisé en ce que**
lorsque le moteur à combustion interne (10) passe dans un mode de poussée (84), on génère un signal de commande (imav) qui autorise une interruption du transport du carburant dans le collecteur de carburant (20) mais qui réalise encore (86) par l'injecteur (18) un nombre d'injections tel que la pression de carburant (pr) diminue.

4. Procédé selon une des revendications précédentes,
**caractérisé en ce qu'**
une soupape de commande de débit (46) dans le système de carburant est mise dans un état ouvert par le signal de commande (imav).

5. Procédé selon une des revendications précédentes,
**caractérisé en ce que**
lorsque la pression de carburant et le régime du moteur à combustion interne sont supérieurs à une valeur déterminée, en particulier à l'issue d'une phase de poussée, on coupe le transport du carburant, en particulier par une soupape de commande de débit, et l'injecteur reçoit une énergie d'excitation augmentée pendant un laps de temps limité.

6. Procédé selon une des revendications précédentes,
**caractérisé en ce que**
le transport du carburant et son injection par les injecteurs sont harmonisés dans le temps de telle sorte que les impulsions de pression dans le collecteur de carburant (20) sont minimales.

7. Programme informatique,
**caractérisé en ce qu'**
il est approprié pour appliquer le procédé selon une des revendications 1 à 6 lorsqu'il est exécuté sur un ordinateur.

8. Programme informatique selon la revendication 7,
**caractérisé en ce qu'**
il est mémorisé dans une mémoire, en particulier une mémoire flash.

9. Appareil de commande et/ou de réglage permettant de faire fonctionner un moteur à combustion interne (10), en particulier d'un véhicule automobile, dont le carburant sous pression (pr) est transporté dans un collecteur de carburant (20) et amené à au moins une chambre de combustion (12) par au moins un injecteur (18),
**caractérisé en ce qu'**
il est approprié pour la commande et/ou le réglage du procédé selon une des revendications 1 à 6.
